# EUROPEAN PATENT APPLICATION

(11) **EP 4 657 129 A1**
(43) Date of publication of application: **03.12.2025**
(21) Application number: 25179190.1
(22) Date of filing: 27.05.2025
(51) Int. Cl.: G02B 6/42

(54) **FIBER ARRAY UNIT ADAPTER WITH HIGH CONTRAST FIDUCIAL STRUCTURES**

(30) Priority: 28.05.2024 US 202463652223 P
(71) Applicant: Corning Research & Development Corporation, Corning, New York 14831 (US)
(72) Inventor: GRYGIEL, Tim, Schoenebeck (DE); SPREEMANN, Martin, Berlin (DE)
(74) Representative: Elkington and Fife LLP

(57) **Abstract**

An FAU adapter includes a glass substrate and a non-transparent layer coated on the first surface of the glass substrate. The glass substrate includes a first surface that is parallel with both a fiber direction of the FAU adapter and an alignment direction of the FAU adapter, wherein the alignment direction is orthogonal to the fiber direction. A plurality of V-grooves are formed within the glass substrate and the non-transparent layer, each V-groove of the plurality of V-grooves including a V-groove axis that extends in the fiber direction, and each V-groove of the plurality of V-grooves extending through the non-transparent layer and through the first surface of the glass substrate.

## Description

### TECHNICAL FIELD

This application claims the benefit of priority of U.S. Provisional Application Serial No. 63/652,223 filed on May 28, 2024, the content of which is relied upon and incorporated herein by reference in its entirety.

### TECHNICAL FIELD

Embodiments of the present disclosure relate to fiber array unit adapters for aligning optical fiber arrays with corresponding arrays in other optical components.

### BACKGROUND

Optical fibers are used for routing optical signals over long distances (e.g., wide area networks (WAN), metropolitan area networks (MAN), local area networks (LAN), etc.). By contrast, optical interconnects (e.g., waveguides) are integrated in substrate materials like glass, polymer, silicon, or other materials for short reach interconnects with lengths of up to one meter. In order for the optical interface between optical fibers, e.g., in a fiber array unit (FAU), and integrated waveguides to facilitate the reliable and efficient transmission of optical signals, the ends of optical fibers and corresponding waveguides must be aligned with high precision (e.g., ± 1 µm placement tolerance). Achieving such high alignment precision can be time and resource intensive. Accordingly, a need exists for FAU adapters that facilitate precise alignment between FAUs and other optical components, such as those containing integrated waveguides, in a quick and cost-efficient manner.

### SUMMARY

Embodiments of the present disclosure are directed to FAU adapters and methods of fabricating the same. Embodiments are also directed to FAU adapter assemblies and methods of manufacturing the same wherein the FAU adapters described herein are assembled to other optical components such as waveguide substrates. The FAU adapters described herein employ high-contrast precision V-grooves that enable a more efficient process for assembling FAU adapters to other optical components such as waveguide substrates. The resulting FAU adapter assemblies may then be coupled to FAUs to provide for the reliable and efficient transmission of optical signals at the optical interface between optical fibers of the FAU and features (e.g., waveguides) of the optical component to which the FAU adapter is coupled.

In one embodiment, an FAU adapter includes a glass substrate and a non-transparent layer coated on the first surface of the glass substrate. The glass substrate includes a first surface that is parallel with both a fiber direction of the FAU adapter and an alignment direction of the FAU adapter, wherein the alignment direction is orthogonal to the fiber direction. A plurality of V-grooves are formed within the glass substrate and the non-transparent layer, each V-groove of the plurality of V-grooves including a V-groove axis that extends in the fiber direction, and each V-groove of the plurality of V-grooves extending through the non-transparent layer and through the first surface of the glass substrate.

In another embodiment, an FAU adapter assembly includes a FAU adapter and a waveguide substrate coupled to the FAU adapter. The FAU adapter includes a glass substrate and a non-transparent layer coated on the first surface of the glass substrate. The glass substrate includes a first surface that is parallel with both a fiber direction of the FAU adapter and an alignment direction of the FAU adapter, wherein the alignment direction is orthogonal to the fiber direction. A plurality of V-grooves are formed within the glass substrate and the non-transparent layer, each V-groove of the plurality of V-grooves including a V-groove axis that extends in the fiber direction, and each V-groove of the plurality of V-grooves extending through the non-transparent layer and through the first surface of the glass substrate.

In yet another embodiment, a method for fabricating an FAU adapter includes: depositing a non-transparent layer on a first surface of a glass substrate, the first surface being parallel with a fiber direction of the FAU adapter and an alignment direction of the FAU adapter, wherein the alignment direction is orthogonal to the fiber direction; and dicing a plurality of V-grooves that extend through the non-transparent layer and the first surface of the glass substrate, wherein each V-groove of the plurality of V-grooves comprises a V-groove axis that extends in the fiber direction.

Additional features and advantages of the embodiments described herein will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts a cross-section of an FAU adapter, according to one or more embodiments described herein;
FIG. 2A schematically depicts a cross-section of an FAU adapter at an initial stage of fabrication wherein a non-transparent layer is coated on a glass substrate, according to one or more embodiments described herein;
FIG. 2B schematically depicts a cross-section of an FAU adapter during fabrication wherein V-grooves have been diced through a non-transparent layer and into the glass substrate of the FAU adapter, according to one or more embodiments described herein;
FIG. 2C schematically depicts a cross-section of an FAU adapter during fabrication wherein alignment pins and spacer pins have been coupled to V-grooves in the FAU adapter, according to one or more embodiments described herein;
FIG. 3A schematically depicts a cross-section of an FAU adapter assembly, according to one or more embodiments described herein;
FIG. 3B depicts a magnified view of a portion of the FAU adapter assembly of FIG. 3A, according to one or more embodiments described herein;
FIG. 4 schematically depicts a perspective view of an FAU adapter, according to one or more embodiments described herein;
FIG. 5 schematically depicts a waveguide substrate of an FAU adapter assembly, according to one or more embodiments described herein;
FIG. 6A schematically depicts a side view of a step in a method for manufacturing an FAU adapter assembly using a pick-and-place machine, according to one or more embodiments described herein;
FIG. 6B schematically depicts an FAU adapter assembled a waveguide substrate using the pick-and-place machine of FIG. 6A, according to one or more embodiments described herein;
FIG. 7A schematically depicts an end view of a step in a method for manufacturing an FAU adapter assembly, according to one or more embodiments described herein;
FIG. 7B depicts a magnified view of a portion of the FAU adapter assembly of FIG. 7A, according to one or more embodiments described herein;
FIG. 8A schematically depicts a top view of an FAU adapter assembly, according to one or more embodiments described herein;
FIG. 8B depicts a magnified view of a portion of the FAU adapter assembly of FIG. 8A, according to one or more embodiments described herein;
FIG. 9A schematically depicts a connection between an FAU adapter assembly and an FAU, according to one or more embodiments described herein; and
FIG. 9B depicts a magnified view of a cross-section of the FAU in FIG. 9A, according to one or more embodiments described herein.

### DETAILED DESCRIPTION

FAUs are often aligned to other optical components containing integrated waveguides using a process referred to as "active alignment," which involves lighting up optical fibers of the FAU and manipulating the position of the FAU, the other optical component, or both, to maximize the transmitted optical power. However, active alignment techniques are time and resource intensive processes. Another general approach for aligning optical fibers of FAUs with integrated waveguides makes use of what is referred to as "passive alignment." Passive alignment schemes generally involve the coupling of corresponding alignment features on the FAU and the waveguide substrate (for example), such that optical fibers of the FAU are aligned with integrated waveguides of the waveguide substrate. In this manner, passive alignment schemes do not involve lighting up optical fibers and adjusting the position of the FAU and waveguide substrate to maximize the transmitted optical power. Accordingly, passive alignment schemes are generally preferred.

One passive alignment solution involves incorporating alignment pins in the waveguide substrate itself wherein the positional relationships between the alignment pins and the waveguides are created with high precision such that when the alignment pins are coupled to corresponding alignment features of the FAU, the waveguides are precisely aligned with the optical fibers of the FAU. However, incorporating alignment pins directly in waveguide substrates limits the design flexibility of the waveguide substrate. For example, the incorporation of alignment pins directly in integrated waveguides may place dimensional restrictions on other components of the waveguide substrate or require the waveguide substrate to be sized in a particular manner, e.g., with a certain minimum thickness, to be able to support the alignment pins. Moreover, differences in thermal expansion behavior between the alignment pins and the base material of the waveguide substrate can also be problematic as the associated mechanical stress and strain on the waveguide substrate can affect its performance and integrity. Accordingly, there exists a need for FAU adapters that facilitate precise alignment between FAUs and optical components such as waveguide substrates in a quick and cost-efficient manner that avoid the need to incorporate alignment pins directly in waveguide substrates.

The FAU adapters of present disclosure have high-contrast fiducial features that facilitate precise assembly to optical components such as waveguide substrates and efficient passive alignment between FAUs and said optical components that does not involve having to light up optical fibers and adjust the position of the components to maximize the transmitted optical power. The high-contrast fiducial features of the FAU adapters described herein are formed by coating a glass substrate with a non-transparent layer and then dicing high-precision V-grooves through the non-transparent layer and into surface of the glass substrate. The removal of the non-transparent layer via dicing at the locations of the V-grooves forms easily identifiable transparent regions that can be readily identified by machine vision techniques and aligned with corresponding fiducial markers on a substrate to which the FAU adapter is to be assembled. The alignment of these high-contrast V-grooves with corresponding fiducial markers on the substrate to which the FAU adapter is to be assembled permits a precise positional relationship between features of the FAU adapter (e.g., alignment pins) and features of the substrate (e.g., waveguides). Further, when alignment pins of the FAU adapter are coupled to corresponding features of the FAU, which themselves have precise positional relationships with the optical fibers of the FAU, precise alignment between the optical fibers of the FAU and features of the substrate (e.g., waveguides) can be achieved.

Reference will now be made in greater detail to various embodiments, some embodiments of which are illustrated in the accompanying drawings. Whenever possible, the same reference numerals will be used throughout the drawings to refer to the same or similar parts.

Before describing several exemplary embodiments, it is to be understood that the present disclosure is not limited to the details of construction or process steps set forth in the present disclosure. The disclosure provided herein is capable of other embodiments and of being practiced or being carried out in various ways.

Reference throughout this specification to "one embodiment," "certain embodiments," "various embodiments," "one or more embodiments" or "an embodiment" means that a particular feature, structure, material, or characteristic described in connection with the embodiment is included in at least one embodiment of the disclosure. Thus, the appearances of the phrases such as "in one or more embodiments," "in certain embodiments," "in various embodiments," "in one embodiment" or "in an embodiment" in various places throughout this specification are not necessarily referring to the same embodiment, or to only one embodiment. Furthermore, the particular features, structures, materials, or characteristics may be combined in any suitable manner in one or more embodiments.

In the following description, like reference characters designate like or corresponding parts throughout the several views shown in the figures. It is also understood that, unless otherwise specified, terms such as "top," "bottom," "outward," "inward," and the like are words of convenience and are not to be construed as limiting terms. In addition, whenever a group is described as comprising at least one of a group of elements and combinations thereof, it is understood that the group may comprise, consist essentially of, or consist of any number of those elements recited, either individually or in combination with each other. Similarly, whenever a group is described as consisting of at least one of a group of elements or combinations thereof, it is understood that the group may consist of any number of those elements recited, either individually or in combination with each other. Unless otherwise specified, a range of values, when recited, includes both the upper and lower limits of the range as well as any ranges therebetween.

As used herein, the indefinite articles "a," "an," and the corresponding definite article "the" mean "at least one" or "one or more," unless otherwise specified. It also is understood that the various features disclosed in the specification and the drawings can be used in any and all combinations.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

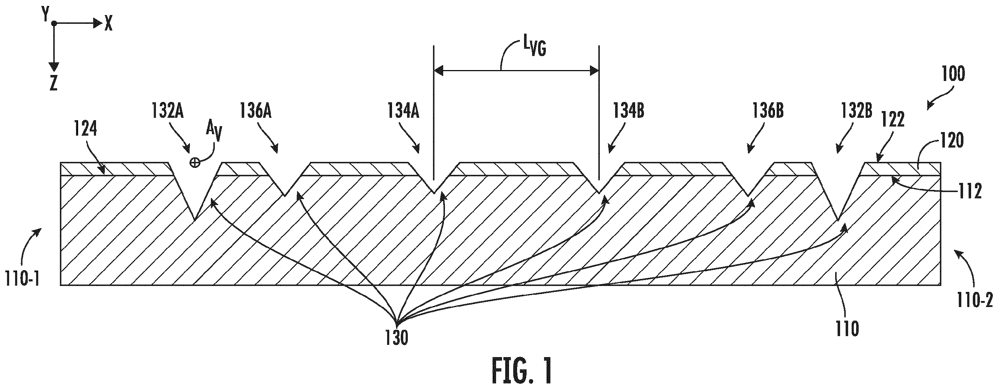

As used herein, the term "fiber direction" (also referred to as the "longitudinal direction"), with respect to the FAU adapter, refers to the direction associated with the optical fiber axes of an FAU when the FAU adapter is coupled to the FAU (i.e., in the +/- Y-direction as depicted in FIG. 1). The term "alignment direction," with respect to the FAU adapter, refers to a direction orthogonal to the fiber direction and parallel with an axis defined by the array of optical fibers of the FAU (i.e., an axis that extends through each optical fiber and is orthogonal to the optical fiber axes) when the FAU adapter is coupled to the FAU (i.e., in the +/- X-direction as depicted in FIG. 1). The term "vertical direction" refers to a direction extending through the thickness of the FAU adapter that is orthogonal to both the fiber direction and the alignment direction (i.e., in the +/- Z-direction as depicted in FIG. 1).

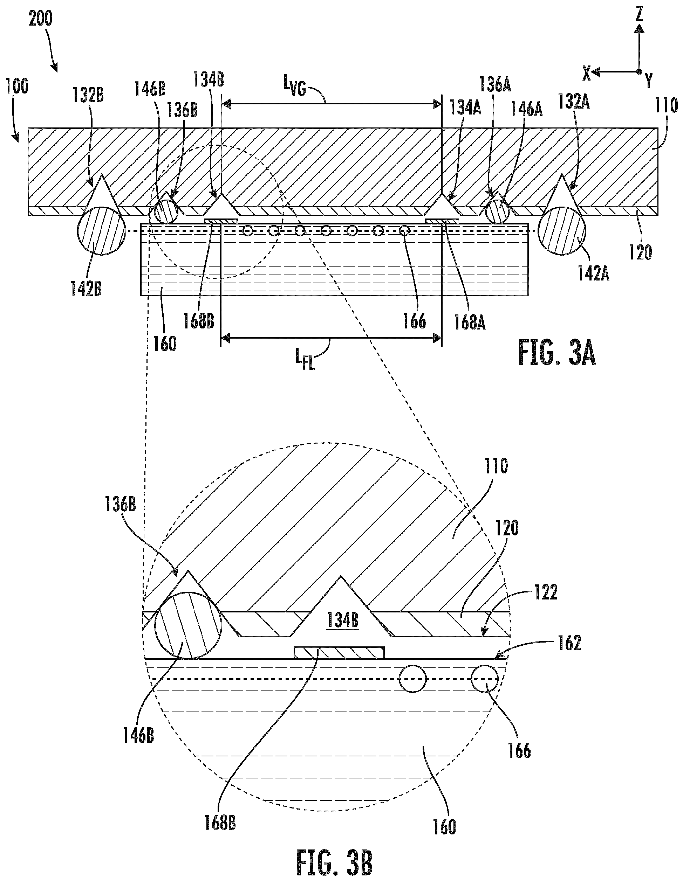

As used herein, the term "waveguide direction," with respect to the waveguide substrate, refers to the direction associated with the axes of the waveguides where the waveguides are optically coupled with optical fibers of an FAU (i.e., in the +/- Y-direction as depicted in FIG. 3A). The term "alignment direction," with respect to the waveguide substrate, refers to a direction orthogonal to the waveguide direction and parallel with an axis defined by the plurality of waveguides of the waveguide substrate (i.e., an axis that extends through each waveguide at the optical interface between the waveguides and the optical fibers that is orthogonal to the waveguide axes; the +/- X-direction as depicted in FIG. 3A).

Referring now to FIG. 1, an FAU adapter 100 of the present disclosure is schematically depicted. The FAU adapter 100 includes a glass substrate 110 having a first surface 112, a non-transparent layer 120 coated on the first surface 112 of the glass substrate 110. The first surface 112 is a planar surface that is parallel with the fiber direction and the alignment direction (indicated as the +/- Y-direction and +/- X-direction, respectively, in the coordinate axes of FIG. 1) of the FAU adapter. The glass substrate 110 has a first side 110-1 and a second side 110-2 opposite the first side 110-1 along the alignment direction. The non-transparent layer 120 includes a first surface 122 spaced from the first surface 112 of the glass substrate 110 by the thickness of the non-transparent layer 120, and a second surface 124 opposite the first surface 122 that is adj acent to the first surface 112 of the glass substrate 110. A plurality of V-grooves 130 are formed within the glass substrate 110 and the non-transparent layer 120. Each V-groove of the plurality of V-grooves 130 has a V-groove axis Av that extends in the fiber direction (extending out of the page in FIG. 1 in the +/- Y-direction). As shown in FIG. 1, each V-groove of the plurality of V-grooves 130 extends through the non-transparent layer 120 and through the first surface 112 of the glass substrate 110.

In embodiments, the non-transparent layer 120 may be coated to the glass substrate 110 by deposition techniques known in the art such as atomic layer deposition, chemical vapor deposition, physical vapor deposition, pulsed laser deposition, etc. The thickness and material selected for the non-transparent layer 120 may be selected such that the non-transparent layer 120 does not allow the passage of light through its thickness such that adequate contrast is obtained between the V-grooves 130 and the remaining portion of the non-transparent layer 120. For example, in embodiments, the non-transparent layer 120 may be a metal coating such as, for example, chrome, titanium, gold, or aluminum. In other embodiments, the non-transparent layer may be non-metallic. In embodiments, the thickness of the non-transparent layer 120 is at least 1 nm (nanometer), at least 3 nm, at least 5 nm, at least 10 nm, at least 20 nm, at least 30 nm, at least 40 nm, at least 50 nm, at least 100 nm, at least 300 nm, at least 500 nm, or at least 1 µm. In embodiments, the thickness of the non-transparent layer 120 is greater than or equal to 1 nm and less than or equal to 1 µm, greater than or equal to 1 nm and less than or equal to 900 nm, greater than or equal to 1 nm and less than or equal to 800 nm, greater than or equal to 1 nm and less than or equal to 700 nm, greater than or equal to 1 nm and less than or equal to 600 nm, greater than or equal to 1 nm and less than or equal to 400 nm, greater than or equal to 1 nm and less than or equal to 400 nm, greater than or equal to 1 nm and less than or equal to 300 nm, greater than or equal to 1 nm and less than or equal to 200 nm, or greater than or equal to 1 nm and less than or equal to 100 nm.

Referring to FIGS. 1 and 3A, the plurality of V-grooves 130 may include a first alignment V-groove 132A configured to receive a first alignment pin 142A, a second alignment V-groove 132B configured to receive a second alignment pin 142B, a first fiducial V-groove 134A, and a second fiducial V-groove 134B spaced from the first fiducial V-groove 134A along the alignment direction of the FAU adapter 100 by a fiducial V-groove spacing L_{VG}. The first alignment pin 142A and the second alignment pin 142B may be coupled to the first alignment V-groove 132A and the second alignment V-groove 132B, respectively. In embodiments, the first alignment pin 142A and the second alignment pin 142B are coupled to the first alignment V-groove 132A and the second alignment V-groove 132B, respectively, such as via adhesive bonds (e.g., via an optical adhesive).

By coating the non-transparent layer 120 on the first surface 112 of the glass substrate 110 and then dicing the V-grooves such that they extend through the non-transparent layer 120 and through the first surface 112 of the glass substrate 110, high-contrast V-grooves may be formed in the FAU adapter 100 that can be used to facilitate a precise and efficient assembly process wherein the FAU adapter 100 is attached to a substrate. In particular, the alignment of such high-contrast V-grooves with corresponding fiducial markers on the substrate to which the FAU adapter 100 is to be assembled permits a precise positional relationship between features of the FAU adapter 100 (e.g., the first and second alignment pins 142A, 142B) and features of the substrate (e.g., waveguides). This precise positional relationship is further enabled by high-precision blade dicing equipment and methods that permit precise positional placement of the V-grooves of the plurality of V-grooves 130 on the FAU adapter 100, along with techniques for creating precisely positioned corresponding fiducial markers (relative to each other and other features of the substrate) on the substrate to which the FAU adapter 100 is to be assembled. The high-contrast V-grooves may be identified by automated pick-and-place machines and used to align the FAU adapter and the substrate with high precision with respect to the alignment direction of the FAU adapter. The alignment pins of the FAU adapter assembly (e.g., FAU adapter attached waveguide substrate) may then be coupled to corresponding alignment features of an FAU to precisely couple optical fibers of the FAU with features (e.g., waveguides) of the substrate to which the FAU adapter is assembled.

In embodiments, the plurality of V-grooves 130 of the FAU adapter 100 may further include a first spacing V-groove 136A configured to receive a first spacer 146A and a second spacing V-groove 136B configured to receive a second spacer 146B. The first and second spacers 146A, 146B may be fibers. The first spacer 146A and the second spacer 146B may be coupled to the first spacing V-groove 136A and the second spacing V-groove 136B, respectively. In embodiments, first spacer 146A and the second spacer 146B are coupled to the first spacing V-groove 136A and the second spacing V-groove 136B, respectively, via adhesive bonds, such as with an optical adhesive. The inclusion of the first and second spacing V-grooves 136A, 136B and the corresponding first and second spacers 146A, 146B allows for a precise positioning of the FAU adapter, and features thereof (e.g., the first and second alignment pins 142A, 142B), relative to the substrate to which the FAU adapter is assembled. As the depth and width of V-grooves can be precisely controlled with high-precision blade dicing equipment and methods, the coupling of the first and second spacers 146A, 146B to their corresponding spacing V-grooves 136A, 136B allows the first and second spacers 146A, 146B, when contacted with the substrate, to precisely space the FAU adapter from the substrate in the vertical direction (i.e., in the +/- Z-direction as depicted in FIG. 3A).

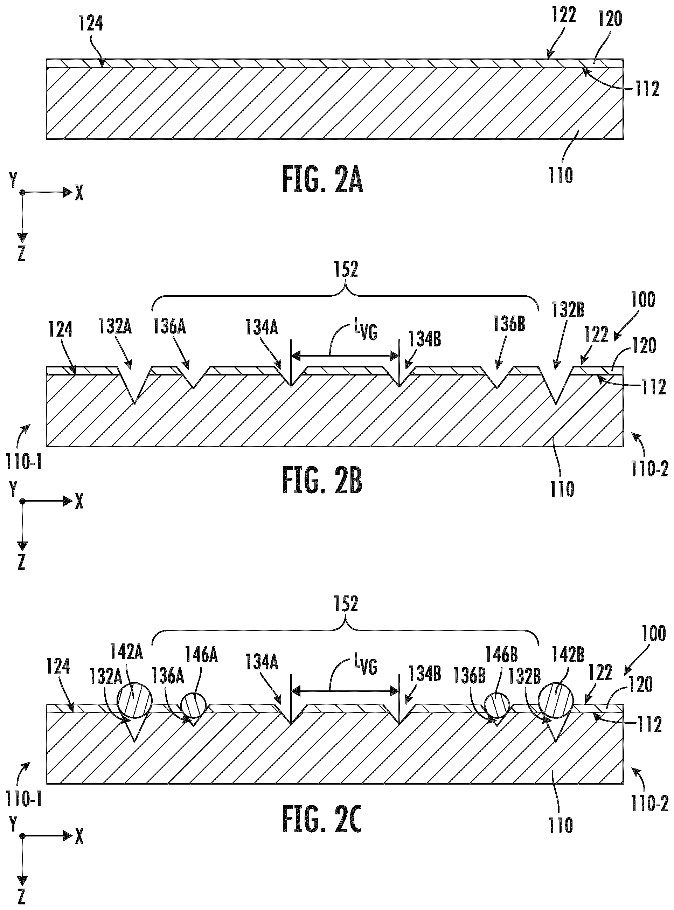

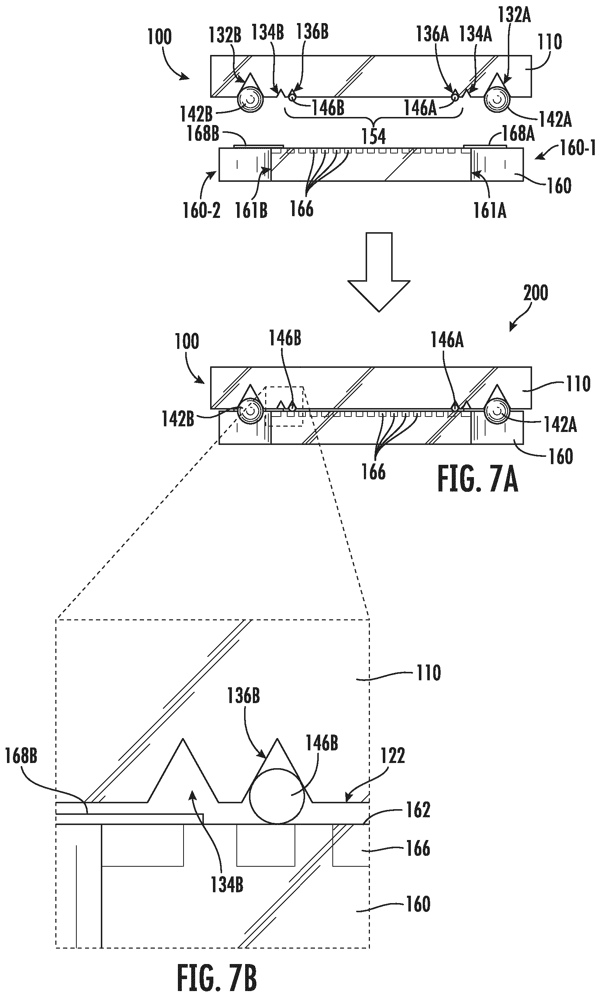

In the embodiment depicted in FIG. 1, the first alignment V-groove 132A is adjacent to the first side 110-1 of the glass substrate 110 and the second alignment V-groove 132B is adjacent to the second side 110-2 of the glass substrate 110, the first alignment V-groove 132A and the second alignment V-groove 132B defining a first region 152 therebetween (indicated in FIG. 2B). As shown in FIG. 2B, the first fiducial V-groove 134A may be within the first region 152 and adjacent or more proximal to the first alignment V-groove 132A and the second fiducial V-groove 134B may be within the first region 152 and adjacent or more proximal to the second alignment V-groove 132B. In embodiments, the first spacing V-groove 136A may be positioned between the first alignment V-groove 132A and the first fiducial V-groove 134A, and the second spacing V-groove 136B may be positioned between the second alignment V-groove 132B and the second fiducial V-groove 132B. In other embodiments, the first fiducial V-groove 134A and the second fiducial V-groove 134B define a second region 154 therebetween (see FIG. 7A). In embodiments, the first spacing V-groove 136A may be positioned within the second region 154 and adjacent to the first fiducial V-groove 134A, and the second spacing V-groove 136B may be positioned within the second region 154 and adjacent to the second fiducial V-groove 134B.

With reference now to FIGS. 2A-2C, embodiments of the present disclosure are also directed to methods for fabricating the fiber array unit adapters described herein. Embodiments of such methods include depositing the non-transparent layer 120 on the first surface 112 of the glass substrate 110 of the FAU adapter 100 and then dicing the plurality of V-grooves 130 that extend through the non-transparent layer 120 and the first surface 112 of the glass substrate 110 of the FAU adapter 100 (see FIG. 2B). The deposition of the non-transparent layer 120 may be performed using techniques know in the art, such as, but not limited to, atomic layer deposition, chemical vapor deposition, physical vapor deposition, and pulsed laser deposition.

The dicing of the plurality of V-grooves 130 may be performed using commercially available high-precision blade dicing equipment such as a system from the High Precision Slicing Machine USM Series available from Shibaura Machine CO., LTD. The method may comprise dicing the plurality of V-grooves 130 in accordance with any of the V-groove designs described herein. The use of high-precision blade dicing equipment allows for the formation of V-grooves in glass substrate 110 of the FAU adapter 100, where other groove forming methods may be inadequate. For example, while crystal structure of silicon allows for V-groove formation by photolithography followed by chemical etching, the amorphous structure of the glass substrate 110 is not compatible with such methods. Similarly, while deep reactive ion etching (DIRE) methods are able to form U-shaped grooves with controlled profiles in glass substrates, U-shaped grooves are inferior to V-grooves with respect to their ability to precisely position the axis of cylindrically shaped object positioned therein such as a pin (e.g., alignment pins 142A, 142B) or fiber spacer (e.g., spacers 146A, 146B). However, because the fiducial V-grooves 134A, 134B are not provided with a pin or fiber, the V-shaped profile may not be required and other groove forming methods may be utilized (e.g., DIRE) to create these structures, provided the fiducial grooves are positioned relative to the alignment V-grooves with high precision. However, in terms of efficiency, forming all grooves using high precision dicing is desirable because it may reduce process steps, providing for more efficient manufacturing and reduced masking needs.

With reference now to FIG. 2C, methods for fabricating FAUs may further include coupling the first alignment pin 142A and the second alignment pin 142B to the first alignment V-groove 132A and the second alignment V-groove 132B, respectively. As mentioned above, the coupling of the first alignment pin 142A and the second alignment pin 142B to their respective alignment V-grooves may involve applying adhesive to the alignment pins, their respective alignment V-grooves, or both, and then contacting the alignment pins with their respective alignment V-grooves with pressure sufficient to bond the alignment pins to their respective alignment V-grooves.

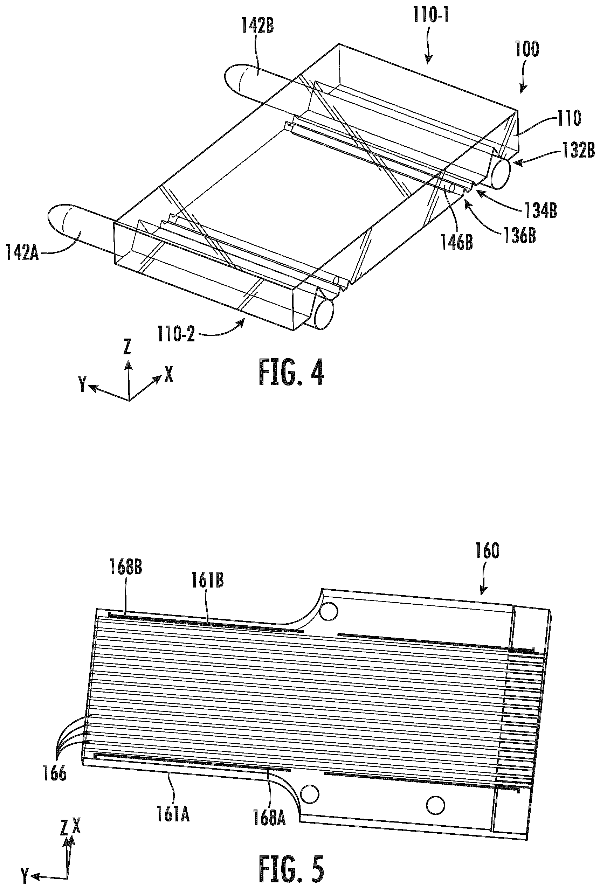

Still referring to FIG. 2C, methods for fabricating FAUs may further include coupling the first spacer 146A and the second spacer 146B to the first spacing V-groove 136A and the second spacing V-groove 136B, respectively. As with the alignment pins, coupling the first spacer 146A and the second spacer 146B to their respective spacing V-grooves may involve applying adhesive, such as an optical adhesive, to the spacer, their respective spacing V-grooves, or both, and then contacting the spacers with their respective spacing V-grooves with pressure sufficient to bond the spacers to their respective spacing V-grooves. FIG. 4 shows a perspective view of the FAU adapter 100 having the first and second alignment pins 142A, 142B and the first and second spacers 146A, 146B coupled thereto. As can be seen in FIG. 4, the V-grooves in the FAU adapter 100 extend through the non-transparent layer and thus provide non-transparent regions through which the alignment pins and spacers can be seen when looking through the glass substrate 110 of the FAU adapter 100.

Embodiments of the present disclosure are also directed to FAU adapter assemblies that include the FAU adapter 100 described herein coupled to a substrate. With reference now to FIGS. 3A and 3B, an embodiment of an FAU adapter assembly 200 includes the FAU adapter 100 coupled to a waveguide substrate 160. Referring to FIG. 5, the waveguide substrate 160 includes a first surface 162 that is parallel the waveguide direction and the alignment direction of the waveguide substrate 160. The waveguide direction of the waveguide substrate 160 is parallel to the fiber direction of the FAU adapter 100. The respective alignment directions of the FAU adapter and the waveguide substrate 160 are also parallel. The waveguide substrate 160 has a first side 160-1 and a second side 160-2 opposite the first side 160-1 along the alignment direction of the waveguide substrate 160. The waveguide substrate 160 includes a plurality of waveguides 166 (e.g., optical waveguides) disposed adjacent to the first surface 162 of the waveguide substrate 160, each waveguide 166 of the plurality of waveguides 166 having a waveguide axis that extends in the waveguide direction (extending out of the page in FIG. 3A in the +/- Y-direction). The waveguides 166 may be subsurface or surface waveguides and may be formed by ion-exchange (IOX), laser-direct writing, deposition, or other processes known in the art. The waveguide substrates described herein may be formed from glass and/or other materials, such as silicon nitride or a polymer(s), for example.

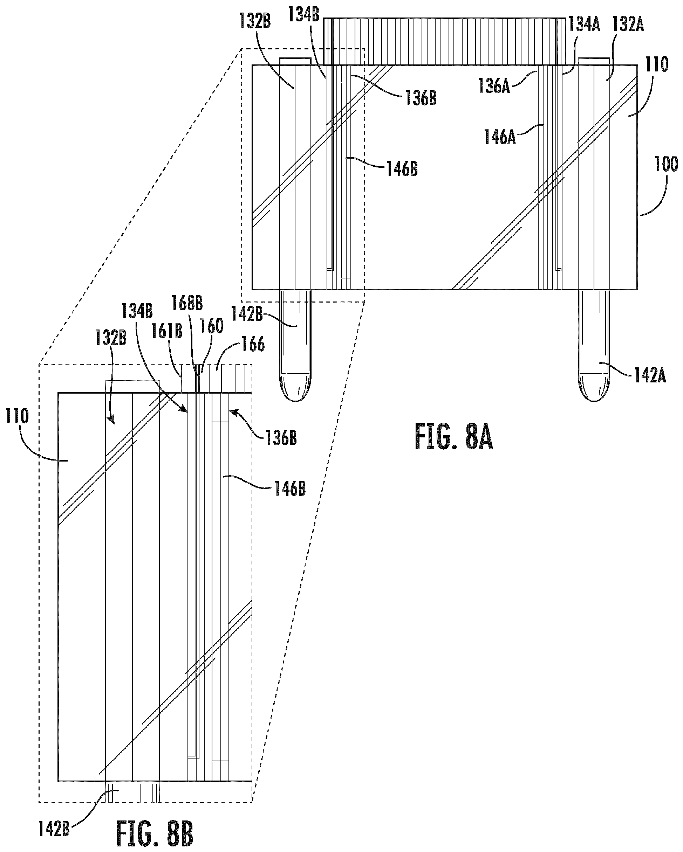

The waveguide substrate 160 includes a first fiducial line 168A and a second fiducial line 168B disposed on or within the first surface 162 of the waveguide substrate 160 and extending in the waveguide direction. The first and second fiducial lines 168A, 168B may be created by processes known in the art including vapor deposition, lithography, and etching. The first fiducial line 168A and the second fiducial line 168B are spaced apart along the alignment direction of the waveguide substrate 160 by a fiducial line spacing L_{FL} that is equal to the fiducial V-groove spacing L_{VG}, as shown in FIG. 3A. The equal spacing between the first and second fiducial V-grooves 134A, 134B in the FAU adapter 100 and between the first and second fiducial lines 168A, 168B of the waveguide substrate 160 permits the FAU adapter 100 and waveguide substrate 160 to be aligned with high precision with respect to the alignment direction. As depicted in FIGS. 3A and 3B, the FAU adapter assembly 200 may be coupled to the waveguide substrate such that the non-transparent layer 120 of the FAU adapter 100 and the first surface 162 of the waveguide substrate 160 are parallel to one another. The first fiducial V-groove 134A of the FAU adapter 100 is in alignment with the first fiducial line 168A of the waveguide substrate 160, and the second fiducial V-groove of the FAU adapter 100 is in alignment with the second fiducial line 168B of the waveguide substrate 160. In this manner, when viewed from above in FIG. 3A, the first and second fiducial lines 168A, 168B are visible through the high-contrast first fiducial V-groove 134A and the high-contrast second fiducial V-groove 134B of the FAU adapter 100, respectively, (also illustrated in FIGS. 8A and 8B).

In the embodiment of the FAU adapter assembly 200 shown in FIG. 3A and 7A, the first alignment pin 142A is spaced apart from a first edge 161A associated with the first side 160-1 of the waveguide substrate 160 and the second alignment pin 142B is spaced apart from the second edge 161B associated with the second side 160-2 of the waveguide substrate 160. The provision of the alignment pins 142A, 142B having a precise positional relationship with respect to the waveguides 166 of the waveguide substrate 160, though without extending from the waveguide substrate 160 itself, increases the design flexibility associated with the waveguide substrate 160 as the waveguide substrate 160 according to this design is not required to support and maintain the position of the alignment pins within waveguide substrate. This design also avoids challenges associated with differing thermal expansion coefficients between the glass material of the waveguide substrate and alignment pins that might otherwise be installed or formed directly in waveguide substrates.

In embodiments wherein the FAU adapter includes the first spacing V-groove 136A with the first spacer 146A coupled thereto and the second spacing V-groove 136B with the second spacer 146B coupled thereto, the coupling of the FAU adapter 100 to the waveguide substrate 160 may involve placing the first and second spacers 146A, 146B in contact with the first surface 162 of the waveguide substrate 160. As can be seen in FIGS. 7A and 7B, this design allows the spacing in the vertical direction between the first and second alignment pins 142A, 142B of the FAU adapter, relative to the waveguide substrates 160 and features thereof, to be controlled for achieving precise vertical alignment between the waveguides 166 and the optical fibers of the FAU. However, it should be understood that other techniques may be used to control the vertical direction spacing between the FAU adapter 100 and the waveguide substrate 160.

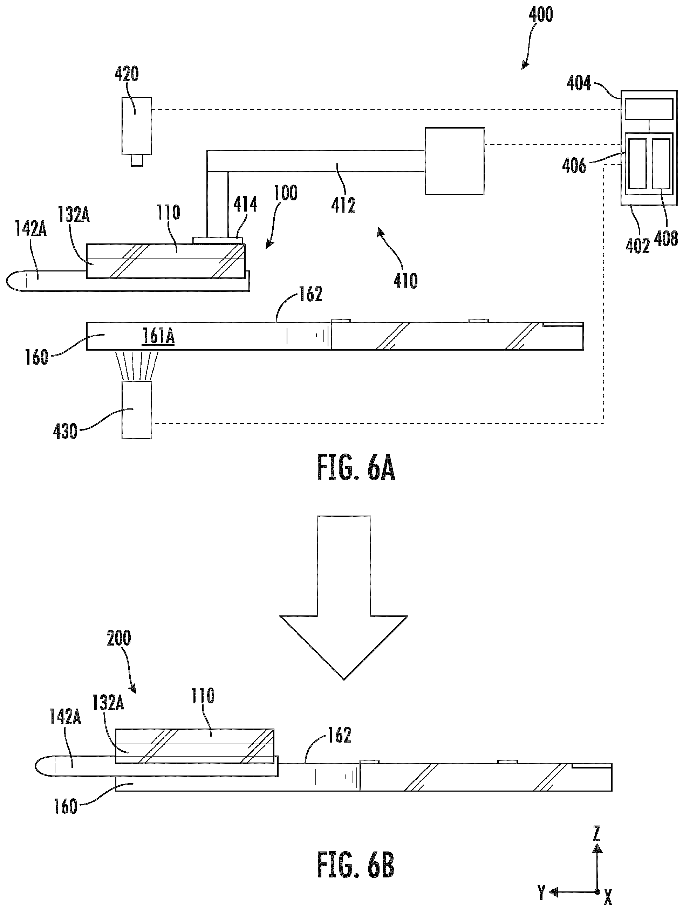

With reference now to FIGS. 6A, 6B, 7A, and 7B, embodiments of the present disclosure are also directed to methods for assembling an FAU adapter assembly 200. In embodiments, methods for assembling an FAU adapter assembly include fabricating an FAU adapter 100 as described above and then coupling the FAU adapter 100 to the waveguide substrate 160. Coupling the FAU adapter 100 to the waveguide substrate 160 may include positioning the FAU adapter 100 such that the non-transparent layer 120 and the first surface 162 of the waveguide substrate 160 are parallel, and then aligning the first fiducial V-groove 134A of the FAU adapter 100 with the first fiducial line 168A of the waveguide substrate 160, and the second fiducial V-groove of the FAU adapter with the second fiducial line 168B of the waveguide substrate 160, as shown in FIG. 7A.

With reference now to FIGS. 6A and 6B, a pick-and-place machine 400 may be used to couple the FAU adapter 100 to the waveguide substrate 160. The pick-and-place machine 400 may include a control system 402 having at least one processor 404, at least one memory module 406 communicatively coupled to the processor(s) 404, and machine readable and executable instructions 408 stored on the memory module(s) 406. The control system 402 may be communicatively coupled to a robotic arm assembly 410 having a robotic arm 412 connected to a gripper 414. The robotic arm assembly 410 may be configured to hold, manipulate, and reposition the FAU adapter 100 in three dimensions. The control system 402 may also be communicatively coupled to an imaging device 420 positioned above the FAU adapter 100 and a light source 430 positioned below the waveguide substrate 160. The machine readable and executable instructions 408, when executed by the processor 404, may cause the light source 430 to direct light towards the waveguide substrate 160, as shown in FIG. 6A. The machine readable and executable instructions 408, when executed by the processor 404, may further cause the imaging device 420 to collect image data from the top of the FAU adapter 100 and send the image data to the control system 402. Based on the image data received by the control system 402 from the imaging device 420, the machine readable and executable instructions 408, when executed by the processor 404, cause the control system 402 to identify (e.g., via object recognition, shape detection, or the like) the fiducial V-grooves 134A, 134B and the fiducial lines 168A, 168B and adjust the position and orientation of the FAU adapter 100, via the robotic arm assembly 410, to align the first fiducial V-groove 134A of the FAU adapter 100 with the first fiducial line 168A of the waveguide substrate 160, and the second fiducial V-groove of the FAU adapter with the second fiducial line 168B of the waveguide substrate 160, as shown in FIG. 7A. The control system 402 may then cause the imaging device 420 to collect and send additional image data and, using this additional data, the control system may re-adjust the position and orientation of the FAU adapter 100, via the robotic arm assembly 410, to further improve the alignment between the fiducial V-grooves on the FAU adapter 100 and the fiducial lines on the waveguide substrate 160. This process may be repeated until the alignment is within a specified tolerance, and then the control system 402 may cause the robotic arm assembly 410 to lower the FAU adapter 100 onto the waveguide substrate 160, such as depicted in FIG. 6B, wherein an optical adhesive (not shown) may be provided on one or both of the FAU adapter 100 and the waveguide substrate 160. In this manner, a highly precise alignment between the FAU adapter 100 and the waveguide substrate 160 is achieved with respect to the alignment direction of the FAU adapter 100.

The alignment of the first and second fiducial V-grooves 134A, 134B with the first and second fiducial lines 168A, 168B, respectively, can be seen more clearly in the end views shown in FIGS. 7A and 7B and the top views shown in FIGS. 8A and 8B. FIGS. 7A and 7B show the visibility of the first and second fiducial lines 168A, 168B through the glass substrate 110 of the FAU adapter 100 and the alignment of the first and second fiducial lines 168A, 168B with their corresponding high-contrast alignment V-grooves in the FAU adapter 100. Additionally, as described above, in embodiments wherein the FAU adapter includes the first spacing V-groove 136A with the first spacer 146A coupled thereto and the second spacing V-groove 136B with the second spacer 146B coupled thereto, methods for assembling the FAU adapter assembly 200 may further comprise contacting the first spacer 146A and the second spacer 146B with the first surface 162 of the waveguide substrate 160.

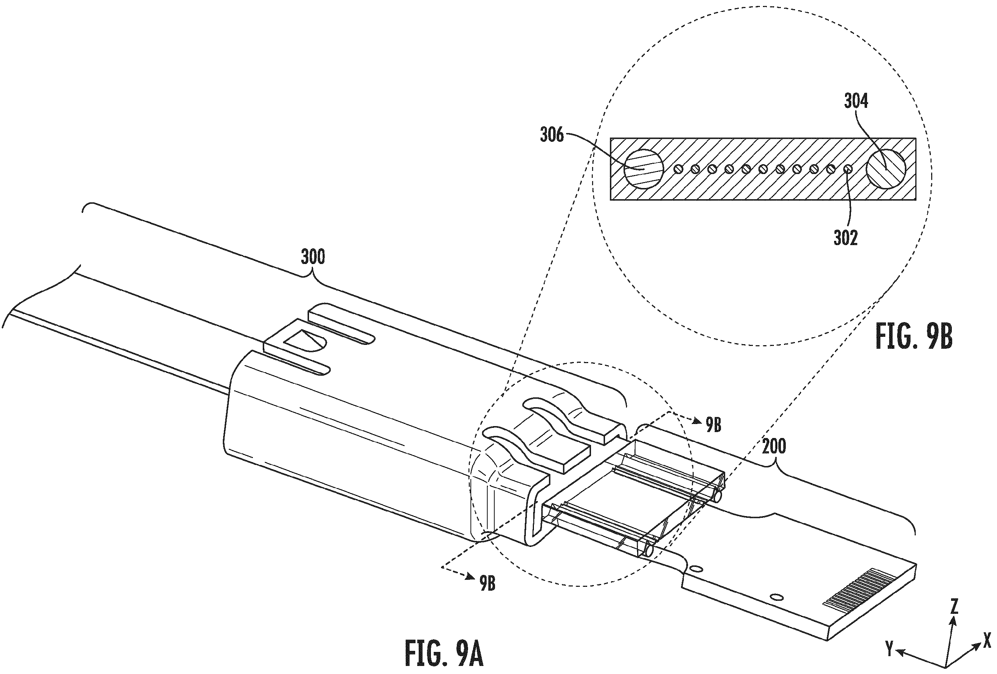

FIG. 9A schematically depicts a connection between the FAU adapter assembly 200 and an FAU 300. FIG. 9B schematically depicts a magnified cross-section of the FAU wherein individual optical fibers 302 of the FAU 300 are shown positioned between alignment holes 304 and 306 configured to receive the alignment pins 142A, 142B of the FAU adapter 100. The precisely positioned alignment, fiducial, and spacing V-grooves of the FAU adapters of the present disclosure enable a more efficient passive alignment process for assembling FAU adapters to other optical components such as waveguide substrates. When the FAU adapter assemblies 200 described herein are coupled to FAUs, the resulting connection, shown in FIGS. 9A and 9B allows for the reliable and efficient transmission of optical signals at the optical interface between optical fibers 302 of the FAU 300 and features (e.g., waveguides 166) of the optical component to which the FAU adapter 100 is assembled.

Embodiments of the present disclosure may be further described with respect to the following numbered clauses:
1. A fiber array unit (FAU) adapter, the FAU adapter comprising: a glass substrate comprising a first surface that is parallel with a fiber direction of the FAU adapter and an alignment direction of the FAU adapter, wherein the alignment direction is orthogonal to the fiber direction; and a non-transparent layer coated on the first surface of the glass substrate, wherein: a plurality of V-grooves are formed within the glass substrate and the non-transparent layer, each V-groove of the plurality of V-grooves comprising a V groove axis that extends in the fiber direction, and each V-groove of the plurality of V-grooves extending through the non-transparent layer and through the first surface of the glass substrate.
2. The FAU adapter of clause 1, wherein the plurality of V-grooves comprises: a first alignment V-groove configured to receive a first alignment pin; a second alignment V-groove configured to receive a second alignment pin; a first fiducial V-groove; and a second fiducial V-groove spaced from the first fiducial V-groove along the alignment direction by a fiducial V-groove spacing L_{VG}.
3. The FAU adapter of clause 2, wherein the first alignment pin is coupled to the first alignment V-groove and the second alignment pin is coupled to the second alignment V-groove.
4. The FAU adapter of any one of clauses 2 or 3, wherein the plurality of V-grooves further comprises: a first spacing V-groove configured to receive a first spacer; and a second spacing V-groove configured to receive a second spacer.
5. The FAU adapter of clause 4, wherein the first alignment pin is coupled to the first alignment V-groove; the second alignment pin is coupled to the second alignment V-groove; the first spacer is coupled to the first spacing V-groove; and the second spacer is coupled to the second spacing V-groove.
6. The FAU adapter of any one of clauses 2 or 3, wherein the glass substrate further comprises: a first side; and a second side opposite the first side along the alignment direction, wherein: the first alignment V-groove is adjacent to the first side and the second alignment V-groove is adjacent to the second side, wherein the first alignment V-groove and the second alignment V-groove define a first region therebetween; the first fiducial V-groove is within the first region and adjacent to the first alignment V-groove; and the second fiducial V-groove is within the first region and adjacent to the second alignment V-groove.
7. The FAU adapter of clause 6, wherein the plurality of V-grooves further comprises: a first spacing V-groove positioned between the first alignment V-groove and the first fiducial V-groove, the first spacing V-groove configured to receive a first spacer; and a second spacing V-groove positioned between the second alignment V-groove and the second fiducial V-groove, the second spacing V-groove configured to receive a second spacer.
8. The FAU adapter of clause 6, wherein the first fiducial V-groove and the second fiducial V-groove define a second region therebetween, and wherein the plurality of V-grooves further comprises: a first spacing V-groove within the second region and adjacent to the first fiducial V-groove, the first spacing V-groove configured to receive a first spacer; and a second spacing V-groove within the second region and adjacent to the second fiducial V-groove, the second spacing V-groove configured to receive a second spacer.
9. An FAU adapter assembly comprising: the FAU adapter of clause 2; and a waveguide substrate coupled to the FAU adapter.
10. The FAU adapter assembly of clause 9, further comprising: a first surface that is parallel with a waveguide direction of the waveguide substrate and an alignment direction of the waveguide substrate, wherein the alignment direction of the waveguide substrate is orthogonal to the waveguide direction; a plurality of waveguides disposed adjacent to the first surface of the waveguide substrate, each waveguide of the plurality of waveguides having a waveguide axis that extends in the waveguide direction; a first fiducial line disposed on the first surface of the waveguide substrate and extending along the waveguide direction; and a second fiducial line disposed on the first surface of the waveguide substrate and extending along the waveguide direction, the second fiducial line being spaced from the first fiducial line along the alignment direction of the waveguide substrate by a fiducial line spacing **L_{FL}** that is equal to the fiducial V-groove spacing **L_{VG},** wherein: the FAU adapter is coupled to the waveguide substrate such that the non-transparent layer and the first surface of the waveguide substrate are parallel to one another; the first fiducial V-groove is in alignment with the first fiducial line; and the second fiducial V-groove is in alignment with the second fiducial line.
11. The FAU adapter assembly of clause 10, wherein the first fiducial line and the second fiducial line are visible through the first fiducial V-groove and the second fiducial V-groove, respectively, when the waveguide substrate is viewed through the FAU adapter.
12. The FAU adapter assembly of any one of clauses 10 or 11, wherein the first alignment pin is coupled to the first alignment V-groove and the second alignment pin is coupled to the second alignment V-groove.
13. The FAU adapter assembly of any one of clauses 10-12, wherein the waveguide substrate further comprises: a first side; and a second side opposite the first side along the alignment direction of the waveguide substrate, wherein: the first alignment pin is spaced apart from a first edge of the waveguide substrate, the first edge associated with first side of the waveguide substrate; the second alignment pin is spaced apart from a second edge of the waveguide substrate, the second edge associated with the second side of the waveguide substrate.
14. The FAU adapter assembly of any one of clauses 10-13, wherein the plurality of V-grooves further comprises: a first spacing V-groove configured to receive a first spacer; and a second spacing V-groove configured to receive a second spacer.
15. The FAU adapter assembly of clause 14, wherein: the first spacer is coupled to the first spacing V-groove and in contact with the first surface of the waveguide substrate; and the second spacer is coupled to the second spacing V-groove and in contact with the first surface of the waveguide substrate.
16. The FAU adapter assembly of clause 14, wherein: the first alignment pin is coupled to the first alignment V-groove; the second alignment pin is coupled to the second alignment V-groove; the first spacer is coupled to the first spacing V-groove and in contact with the first surface of the waveguide substrate; and the second spacer is coupled to the second spacing V-groove and in contact with the first surface of the waveguide substrate.
17. The FAU adapter assembly of clause 10, wherein the glass substrate of the FAU adapter further comprises: a first side; and a second side opposite the first side along the alignment direction of the glass substrate, wherein: the first alignment V-groove is adjacent to the first side of the glass substrate of the FAU adapter; the second alignment V-groove is adjacent to the second side of the glass substrate of the FAU adapter; the first alignment V-groove and the second alignment V-groove define a first region therebetween; the first fiducial V-groove is within the first region and adjacent to the first alignment V-groove; and the second fiducial V-groove is within the first region and adjacent to the second alignment V-groove.
18. The FAU adapter assembly of clause 17, wherein the plurality of V-grooves further comprises: a first spacing V-groove positioned between the first alignment V-groove and the first fiducial V-groove, the first spacing V-groove configured to receive a first spacer; and a second spacing V-groove positioned between the second alignment V-groove and the second fiducial V-groove, the second spacing V-groove configured to receive a second spacer.
19. The FAU adapter assembly of any one of clauses 17 or 18, wherein: the first spacer is coupled to the first spacing V-groove and in contact with the first surface of the waveguide substrate; and the second spacer is coupled to the second spacing V-groove and in contact with the first surface of the waveguide substrate.
20. The FAU adapter assembly of clause 17, wherein the first fiducial V-groove and the second fiducial V-groove define a second region therebetween, and wherein the plurality of V-grooves further comprises: a first spacing V-groove within the second region and adjacent to the first fiducial V-groove, the first spacing V-groove configured to receive a first spacer; and a second spacing V-groove within the second region and adjacent to the second fiducial V-groove, the second spacing V-groove configured to receive a second spacer.
21. The FAU adapter assembly of clause 20, wherein: the first spacer is coupled to the first spacing V-groove and in contact with the first surface of the waveguide substrate; and the second spacer is coupled to the second spacing V-groove and in contact with the first surface of the waveguide substrate.
22. A method for fabricating a fiber array unit (FAU) adapter, the method comprising: depositing a non-transparent layer on a first surface of a glass substrate, the first surface being parallel with a fiber direction of the FAU adapter and an alignment direction of the FAU adapter, wherein the alignment direction is orthogonal to the fiber direction; and dicing a plurality of V-grooves that extend through the non-transparent layer and the first surface of the glass substrate, wherein each V-groove of the plurality of V-grooves comprises a V-groove axis that extends in the fiber direction.
23. The method of clause 22, wherein the plurality of V-grooves comprises: a first alignment V-groove configured to receive a first alignment pin; a second alignment V-groove configured to receive a second alignment pin; a first fiducial V-groove; and a second fiducial V-groove spaced from the first fiducial V-groove along the alignment direction by a fiducial V-groove spacing L_{VG}, wherein the method further comprises: coupling the first alignment pin to the first alignment V-groove; and coupling the second alignment pin to the second alignment V-groove.
24. The method of clause 23, wherein the plurality of V-grooves further comprises: a first spacing V-groove configured to receive a first spacer; and a second spacing V-groove configured to receive a second spacer, wherein the method further comprises: coupling the first spacer to the first spacing V-groove; and coupling the second spacer to the second spacing V-groove.
25. A method for manufacturing an FAU adapter assembly, the method comprising: fabricating an FAU adapter by performing the method of any one of clauses 22-24; and coupling the FAU adapter to a waveguide substrate.
26. The method of clause 25, wherein the waveguide substrate comprises: a first surface that is parallel with a waveguide direction of the waveguide substrate and an alignment direction of the waveguide substrate, wherein the alignment direction of the waveguide substrate is orthogonal to the waveguide direction; a plurality of waveguides disposed adjacent to the first surface of the waveguide substrate, each waveguide of the plurality of waveguides having a waveguide axis that extends in the waveguide direction; a first fiducial line disposed on the first surface of the waveguide substrate and extending along the waveguide direction; and a second fiducial line disposed on the first surface of the waveguide substrate and extending along the waveguide direction, the second fiducial line being spaced from the first fiducial line along the alignment direction of the waveguide substrate by a fiducial line spacing **L_{FL}** that is equal to the fiducial V-groove spacing **L_{VG},** wherein coupling the FAU adapter to the waveguide substrate comprises: positioning the FAU adapter such that the non-transparent layer and the first surface of the waveguide substrate are parallel; aligning the first fiducial V-groove with the first fiducial line; and aligning the second fiducial V-groove with the second fiducial line.
27. The method of clause 26, wherein the plurality of V-grooves further comprises: a first spacing V-groove configured to receive a first spacer; and a second spacing V-groove configured to receive a second spacer, wherein the method for manufacturing the FAU adapter further comprises: coupling the first spacer to the first spacing V-groove; coupling the second spacer to the second spacing V-groove; and contacting the first spacer and the second spacer with the first surface of the waveguide substrate.

It should be understood that while the FAU adapter described herein is discussed in the context of coupling an FAU to an integrated waveguide, the FAU adaptor could also be used to couple FAUs to other substrates, such as an electro-optical substrate, photonic integrated circuit (PLC), optical splitters, fan-out or break our modules, three-dimensional PICs having one or more waveguides buried below the surface, etc.

It will be apparent to those skilled in the art that various modifications and variations can be made to the embodiments described herein without departing from the spirit and scope of the claimed subject matter. Thus it is intended that the specification cover the modifications and variations of the various embodiments described herein provided such modification and variations come within the scope of the appended claims and their equivalents.

## Claims

1. A fiber array unit (FAU) adapter, the FAU adapter comprising:
a glass substrate comprising a first surface that is parallel with a fiber direction of the FAU adapter and an alignment direction of the FAU adapter, wherein the alignment direction is orthogonal to the fiber direction; and
a non-transparent layer coated on the first surface of the glass substrate,
wherein:
a plurality of V-grooves are formed within the glass substrate and the non-transparent layer, each V-groove of the plurality of V-grooves comprising a V-groove axis that extends in the fiber direction, and each V-groove of the plurality of V-grooves extending through the non-transparent layer and through the first surface of the glass substrate.

2. The FAU adapter of claim 1, wherein the plurality of V-grooves comprises:
a first alignment V-groove configured to receive a first alignment pin;
a second alignment V-groove configured to receive a second alignment pin;
a first fiducial V-groove; and
a second fiducial V-groove spaced from the first fiducial V-groove along the alignment direction by a fiducial V-groove spacing **L_{VG}.**

3. The FAU adapter of claim 2, wherein the first alignment pin is coupled to the first alignment V-groove and the second alignment pin is coupled to the second alignment V-groove.

4. The FAU adapter of claim 1 or claim 2, wherein the plurality of V-grooves further comprises:
a first spacing V-groove configured to receive a first spacer; and
a second spacing V-groove configured to receive a second spacer.

5. The FAU adapter of claim 4, wherein:
the first alignment pin is coupled to the first alignment V-groove;
the second alignment pin is coupled to the second alignment V-groove;
the first spacer is coupled to the first spacing V-groove; and
the second spacer is coupled to the second spacing V-groove.

6. The FAU adapter of any of claims 2 to 5, wherein the glass substrate further comprises:
a first side; and
a second side opposite the first side along the alignment direction,
wherein:
the first alignment V-groove is adjacent to the first side and the second alignment V-groove is adjacent to the second side, wherein the first alignment V-groove and the second alignment V-groove define a first region therebetween;
the first fiducial V-groove is within the first region and adjacent to the first alignment V-groove; and
the second fiducial V-groove is within the first region and adjacent to the second alignment V-groove.

7. The FAU adapter of any of claims 2 to 6, wherein the plurality of V-grooves further comprises:
a first spacing V-groove positioned between the first alignment V-groove and the first fiducial V-groove, the first spacing V-groove configured to receive a first spacer; and
a second spacing V-groove positioned between the second alignment V-groove and the second fiducial V-groove, the second spacing V-groove configured to receive a second spacer.

8. The FAU adapter of claim 6, wherein the first fiducial V-groove and the second fiducial V-groove define a second region therebetween, and wherein the plurality of V-grooves further comprises:
a first spacing V-groove within the second region and adjacent to the first fiducial V-groove, the first spacing V-groove configured to receive a first spacer; and
a second spacing V-groove within the second region and adjacent to the second fiducial V-groove, the second spacing V-groove configured to receive a second spacer.

9. An FAU adapter assembly comprising:
the FAU adapter of claim 2; and
a waveguide substrate coupled to the FAU adapter.

10. The FAU adapter assembly of claim 9, further comprising:
a first surface that is parallel with a waveguide direction of the waveguide substrate and an alignment direction of the waveguide substrate, wherein the alignment direction of the waveguide substrate is orthogonal to the waveguide direction;
a plurality of waveguides disposed adjacent to the first surface of the waveguide substrate, each waveguide of the plurality of waveguides having a waveguide axis that extends in the waveguide direction;
a first fiducial line disposed on the first surface of the waveguide substrate and extending along the waveguide direction; and
a second fiducial line disposed on the first surface of the waveguide substrate and extending along the waveguide direction, the second fiducial line being spaced from the first fiducial line along the alignment direction of the waveguide substrate by a fiducial line spacing **L_{FL}** that is equal to the fiducial V-groove spacing **L_{VG},**
wherein:
the FAU adapter is coupled to the waveguide substrate such that the non-transparent layer and the first surface of the waveguide substrate are parallel to one another;
the first fiducial V-groove is in alignment with the first fiducial line; and
the second fiducial V-groove is in alignment with the second fiducial line.

11. The FAU adapter assembly of claim 10, wherein the first fiducial line and the second fiducial line are visible through the first fiducial V-groove and the second fiducial V-groove, respectively, when the waveguide substrate is viewed through the FAU adapter.

12. The FAU adapter assembly of claim 10 or claim 11, wherein the first alignment pin is coupled to the first alignment V-groove and the second alignment pin is coupled to the second alignment V-groove.

13. The FAU adapter assembly of any of claims 10 to 12, wherein the waveguide substrate further comprises:
a first side; and
a second side opposite the first side along the alignment direction of the waveguide substrate,
wherein:
the first alignment pin is spaced apart from a first edge of the waveguide substrate, the first edge associated with first side of the waveguide substrate;
the second alignment pin is spaced apart from a second edge of the waveguide substrate, the second edge associated with the second side of the waveguide substrate.

14. The FAU adapter assembly of any of claims 10 to 13, wherein the plurality of V-grooves further comprises:
a first spacing V-groove configured to receive a first spacer; and
a second spacing V-groove configured to receive a second spacer.

15. The FAU adapter assembly of claim 14, wherein:
the first spacer is coupled to the first spacing V-groove and in contact with the first surface of the waveguide substrate; and
the second spacer is coupled to the second spacing V-groove and in contact with the first surface of the waveguide substrate.
